# EUROPEAN PATENT APPLICATION

(11) **EP 1 511 012 A1**
(43) Date of publication of application: **02.03.2005**
(21) Application number: 03725816.7
(22) Date of filing: 16.05.2003
(51) Int. Cl.: G11B 5/02, G11B 11/14, G06K 7/08, G06K 17/00, G06K 19/12

(54) **MAGNETIC RECORDING MEDIUM AUTHENTICATION METHOD, MAGNETIC RECORDING MEDIUM AUTHENTICATION SYSTEM, AND AUTHENTICABLE MAGNETIC RECORDING MEDIUM**

(30) Priority: 31.05.2002 JP 2002196522
(71) Applicant: Leisure Electronics Technology Co., Ltd., Tokyo 101-0003 (JP)
(72) Inventor: SUKAGAWA, S.,c/o Leisure Electronics Tech. Co. Ltd, Tokyo 101-0003 (JP)
(74) Representative: Robson, Aidan John
(86) International application number: PCT/JP2003/006159
(87) International publication number: WO 2003/102925

(57) **Abstract**

Disclosed is a method of authenticating a magnetic recording medium, capable of immediately detecting unauthorized use of a magnetic recording medium by a stranger other than an owner of the magnetic recording medium, and maintaining a degree of compatibility with conventional magnetic recording mediums. In this method, a physical pattern is formed in a recording region adapted to magnetically record basic information thereon, so as to change a magnetic property of the recording region to an extent allowing the basic information to be read from and/or written in the recording region. On the occasion of authentication of the magnetic recording medium, a magnetic characteristic induced by the physical pattern is read from the recording region to generate authentication information in accordance with the magnetic characteristic. Then, the magnetic recording medium is authenticated in accordance with the authentication information. When the basic information on the magnetic recording medium formed with the physical pattern is duly rewritten, new authentication information is re-generated to authenticate the rewritten magnetic recording medium in accordance with the new authentication information.

## Description

### TECHNICAL FIELD

The present invention relates to an authentication method and system for a magnetic recording medium, and an authenticatable magnetic recording medium, which are applicable to not only a read-only magnetic card designed to record magnetic information thereon in a non-rewritable manner but also a magnetic card designed to record magnetic information thereon in a rewritable manner.

### BACKGROUND ART

In connection with the popularization of various cards recording thereon personal information or balance information, such as credit cards, prepaid cards, cash cards or reward cards, unauthorized or fraudulent uses of forged or altered cards have become a serious social issue, and it is thus strongly desired to provide possible countermeasures to resolve the issue. In particular, a magnetic card designed to record information on a magnetic material involves a high risk of fraudulent rewriting, due to a relatively small amount of writable information resulting from the need for performing information reading/writing operations under the circumstances where a card reader/writer has poor mechanical accuracy; the use of the magnetic card for a limited number of purposes; and relatively poor protection against information rewriting using a card reader/writer.

Japanese Patent Laid-Open Publication No. 10-154218 proposes a technique for increasing the recording density of magnetic barcodes to record identification information unique to individual magnetic recording mediums. Japanese Patent Laid-Open Publication No. 07-047792 proposes a technique for forming a random or irregular pattern on the surface of a card using an optical detector. Japanese Patent Laid-Open Publication No. 10-154218 proposes a method for partially erasing a magnetic layer using a heat source, such as laser, to write intended data.

However, the above techniques are incompatible with conventional popular magnetic cards in terms of production process and operation, and therefore cannot be used in the current common infrastructure.

In view of the above circumstances, it is an object of the present invention to provide an authentication method and system for a magnetic recording medium, capable of immediately detecting unauthorized use of a magnetic recording medium by a stranger other than a normal or authorized owner of the magnetic recording medium and maintaining a degree of compatibility with conventional magnetic recording mediums, and to provide a magnetic recording medium capable of being authenticated through the above method.

### DISCLOSURE OF INVENTION

In order to achieve the above object, according to the present invention, a physical pattern is formed in a recording region adapted to magnetically record basic information thereon, so as to change a magnetic property of the recording region to an extent allowing the basic information to be read from and/or written in the recording region. On the occasion of authentication of the magnetic recording medium, a magnetic characteristic induced by the physical pattern is read from the recording region to generate authentication information in accordance with the magnetic characteristic. Then, the magnetic recording medium is authenticated in accordance with the authentication information.

When the basic information on the magnetic recording medium formed with the physical pattern is duly rewritten, new authentication information may be re-generated in the same manner as above to authenticate the rewritten magnetic recording medium in accordance with the new authentication information.

The content of the authentication information may be recorded on the magnetic recording medium separately from the basic information, or may be recorded at a remote location capable of communicating with a reader/writer for the magnetic recording medium via a communication line.

The physical pattern may be formed by irradiating the recording region with laser light or light from a halogen lamp.

### BRIEF DESCRIPTION OF DRAWINGS

FIG 1 is a schematic top plan view showing a conventional magnetic card.
FIG. 2 is a schematic diagram showing a means for forming on a magnetic recording region of a magnetic card a physical pattern for use in generating authentication information for individual magnetic recording mediums.
FIG 3(A) is a schematic diagram showing one example of basic information magnetically recorded on a magnetic recording region.
FIG 3(B) is a schematic diagram showing one example of a physical pattern which is formed on the magnetic recording region with the magnetically recorded basic information, by irradiating the magnetic recording region with laser light.
FIG 4 is a detailed diagram showing one of the tracks of the magnetic recording region in FIG 3(B).
FIGS. 5 (A) and 5(B) are block diagrams showing examples of a circuit for processing a signal to be obtained by reading a magnetic characteristic from a magnetic recording region with a physical pattern, using a magnetic head.
FIGS. 6 (A) to 6(C) are schematic waveform charts showing signals in different sections of the circuit in FIG. 5 (A).
FIG 7 is an explanatory sectional view of a magnetic card formed with a physical pattern through various methods.

### BEST MODE FOR CARRYING OUT THE INVENTION

With reference to the drawings, a magnetic-recording-medium authentication method and system and an authenticatable magnetic recording medium according to one embodiment of the present invention will be described. While the following description will be made in connection with one embodiment where a magnetic card is used as a magnetic recording medium, and an after-mentioned physical-pattern forming apparatus and authentication- information reader are specially designed for magnetic cards, a magnetic recording medium to be covered by the present invention is not limited to such magnetic cards, but is instead intended to be applicable to any other magnetic recording medium adapted to magnetically record information thereon and required to be authenticated.

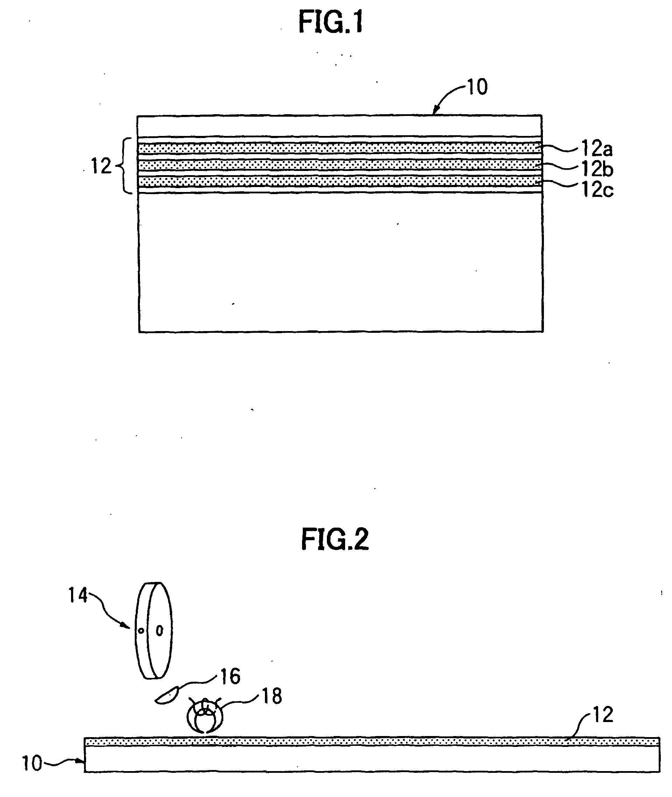

FIG 1 is a schematic top plan view showing a conventional typical magnetic card 10. The magnetic card 10 has a magnetic recording region 12 formed by applying a magnetic material directly thereon or by attaching thereonto a film coated with a magnetic material layer. In the example illustrated in FIG. 1, three tracks 12a, 12b, 12c are formed in the magnetic recording region 12. These tracks 12a, 12b, 12c are intended to record basic information [which is equivalent to the "first magnetic information" described in Japanese Patent Application No. 2002-196522 serving as a basis for the claim of priority (hereinafter referred to as the "basic application")] essential for the magnetic card to carry out its original function.

The basic information may be recorded in a read-only manner or in a rewritable manner. In cases where the magnetic card is used as a bank's cash card, a finance company's credit card or the like, information about the owner's name, account number, credit card number, issue date, etc. is recorded as the basic information in a read-only manner. Otherwise, in cases where the magnetic card is used as a prepaid card or the like, information about a balance or the number of uses is recorded as the basic information in such a manner as to be rewritable after issue of the card.

FIG 2 shows a physical-pattern formation means according to one embodiment of the present invention. The physical-pattern formation means is designed to form a physical pattern for use in generating authentication information (which is equivalent to "second magnetic information" described in the basic application) of individual magnetic cards according to the present invention, in the magnetic recording region 12 of the magnetic card 10.

In this embodiment, a laser 14 is used as the physical-pattern formation means, and a physical pattern is formed in the magnetic recording region 12 by irradiating the magnetic recording region 12 with a laser beam generated from the laser 14. The laser 14 is a rotary laser head designed to emit a laser beam through a lens 16 onto the magnetic recording region 12 of the card which is being moved in its longitudinal direction. The rotary laser head has a rotation axis which is slightly inclined relative to the longitudinal direction of the card so as to allow the magnetic recording region to be irradiated with the laser beam at an angle perpendicular to the longitudinal direction of the moving card.

The reference numeral 18 indicates a magnetic head for writing/reading the basic information in/from the magnetic recording region. In this embodiment, this magnetic head 18 is also used to read a magnetic characteristic induced by the physical pattern formed in the magnetic recording region 12. That is, this embodiment has one feature in that the single magnetic head 18 is used to not only write/read the basic information but also read a magnetic characteristic induced by the physical pattern.

It is known that the magnetic characteristic of a magnetic material is changed by heating it up to a certain temperature or more. Thus, when the magnetic recording region 12 of the magnetic card 10 is irradiated with a laser beam, the temperature of the irradiated portion is instantaneously increased so that the magnetic characteristic of the portion irradiated with the laser beam can be changed according to the irradiation time, irradiated range, beam intensity or the like. In addition, the laser can mechanically control the emission direction of a laser beam without difficulty. Thus, the magnetic recording region 12 can be irradiated with a laser beam in any pattern, such as a continuous or intermittent pattern. Such a pattern is referred to as a "physical pattern" herein. The laser can be used to form a physical pattern quickly and readily to change the magnetic characteristic of the magnetic recording region 12.

It is to be noted that a physical pattern is formed to change a magnetic characteristic due to the formation of the physical pattern to an extent which does not adversely affect the content of the basic information and the reading/writing operations of the basic information. As a substitute for the laser, a light source, such as a halogen lamp, capable of emitting high-energy light to serve as a heat source, may be used as the physical-pattern formation means.

As described in detail later, a physical pattern acts as a kind of a fingerprint for identifying individual magnetic cards, and can be utilized to establish an authentication system for authenticating individual magnetic cards. This authentication system can prevent unauthorized uses, such as where a vicious or malicious person illegally acquires basic information of a magnetic card of another person, and records the basic information on another card to use the forged card as if he/she was a person identical to the person the basic information is related to. This point will be described in detail below.

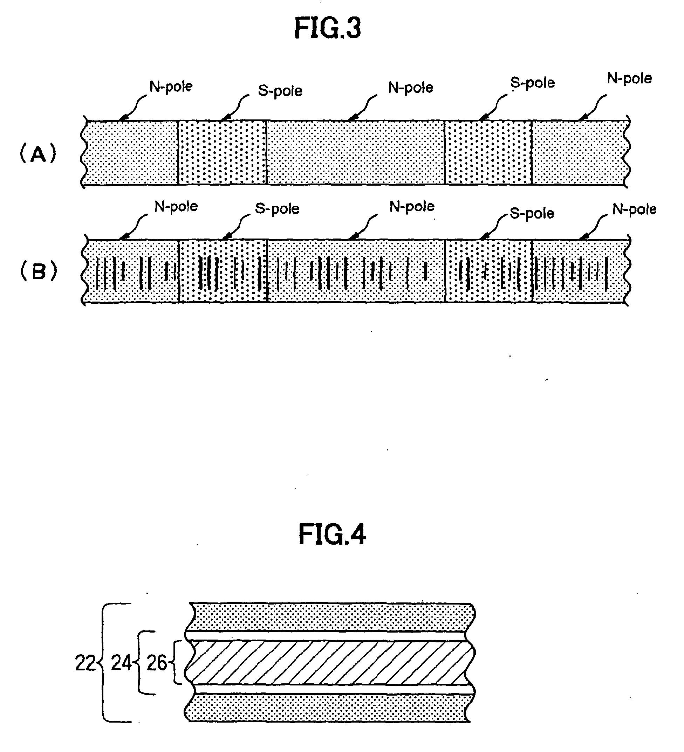

FIG. 3(A) schematically shows one example of basic information magnetically recorded on the magnetic recording region 12, and FIG 3(B) schematically shows one example of a physical pattern which is formed in the magnetic recording region 12 having the basic information by irradiating the magnetic recording region 12 with laser light. In FIG. 3(B), a physical pattern formed by laser light irradiation corresponds to portions indicated by vertical lines in each of basic information zones (indicated by S-poles and N-poles), and a group of the vertical lines formed in the zone subjected to the laser light irradiation serve as a single physical pattern. As mentioned above, this physical pattern has no adverse affect on the basic information itself and the reading operation of the basic information. Further, in cases where basic information is rewritten as in a prepaid card, the presence of a physical pattern formed as shown in FIG. 3(B) does not adversely affect the operation of erasing existing basic information and the operation of rewriting new basic information.

FIG. 4 is a detailed diagram showing one of the tracks of the magnetic recording region in FIG. 3(B). A writing track 22 for use in writing basic information in the magnetic recording region 12 through use of the magnetic head 18 is set to have a width greater than that of a reading track 24 for use in reading the written or recorded basic information through use of the magnetic head 18. For example, the writing track 22 and the reading track 24 are set to have widths of 6 mm and 3 mm, respectively. This setting is made to allow the recorded basic information to be reliably read even if the position of the magnetic head relative to the magnetic card is slightly displaced in the vertical direction in FIG. 4 due to mechanical errors during the operation of reading the basic information.

Further, in this embodiment, a physical pattern is formed in a zone fully included in the reading track 24. For example, as shown in FIG. 4, the physical-pattern formation zone 26 is set to have a width of 2 mm which is fully included in the width of the reading track 24. Thus, even if there are the aforementioned mechanical errors or the readers differ from each other, the zone formed with a physical pattern can be reliably covered by the magnetic head.

The physical-pattern formation zone fully included in the width of the reading track 24 allows the magnetic head for reading basic information to be additionally used for reading a magnetic characteristic induced by a physical pattern, as described above. In addition, during the process in which the after-mentioned authentication information is picked up from the magnetic card, the physical-pattern formation zone can prevent occurrence of a problem in which the authentication information is varied depending on the reader or is varied every time it is read even by the same reader, so as to allow the authentication information to be stably picked up. Furthermore, as for only basic information, the physical-pattern formation zone allows the magnetic card according to the present invention to advantageously maintain compatibility with existing readers for reading only basic information.

A method of identifying individual magnetic cards each formed with a physical pattern will be described below. When a physical pattern is formed in the magnetic recording region 12 by irradiating the magnetic recording region 12 with laser light, the magnetic characteristic of the magnetic recording region before the laser light irradiation is changed once the laser right irradiation is finished. As mentioned above, the change in the magnetic characteristic is a small one having no adverse affect on the content of the basic information and the operations for reading/writing the basic information. Thus, the magnetic characteristic obtained after the formation of the physical pattern is affected by not only the formed physical pattern itself but also surrounding physical conditions, such as the size (several µm to several hundred µm) and shape of each of magnetic particles constituting the magnetic recording region, the arrangement of the magnetic particles, and a magnetic characteristic induced by the basic information. That is, the obtained magnetic characteristic is a complicated one resulting from interaction thereof with said surrounding physical conditions.

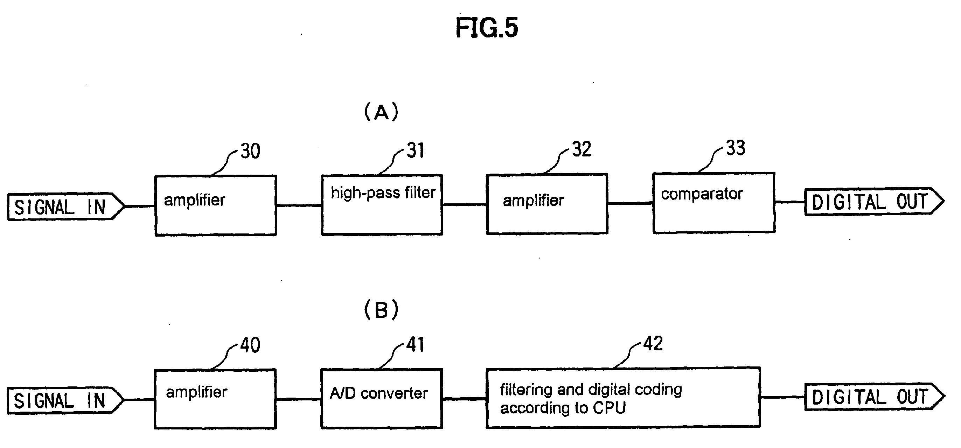

FIGS. 5(A) and 5(B) are block diagrams showing examples of a circuit for processing a signal to be obtained by reading a magnetic characteristic from the magnetic recording region 12 with a physical pattern using the magnetic head 18 (see FIG. 2). In the circuit in FIG 5(A), a signal from the magnetic head 18 is amplified by an amplifier 30, and passed through a high-pass filter 31. Then, the filtered signal is further amplified by an amplifier 32, and sent to a comparator 33. The comparator 33 binarizes the amplified signal by comparing it with a given threshold, and outputs a pulsed signal. In the circuit in FIG 5(B), a signal from the magnetic head 18 is amplified by an amplifier 40, and digitalized by an A/D converter 41. Then, the digital signal is subjected to filtering and digital coding, and output in the same signal form as that in the circuit in FIG. 5(A).

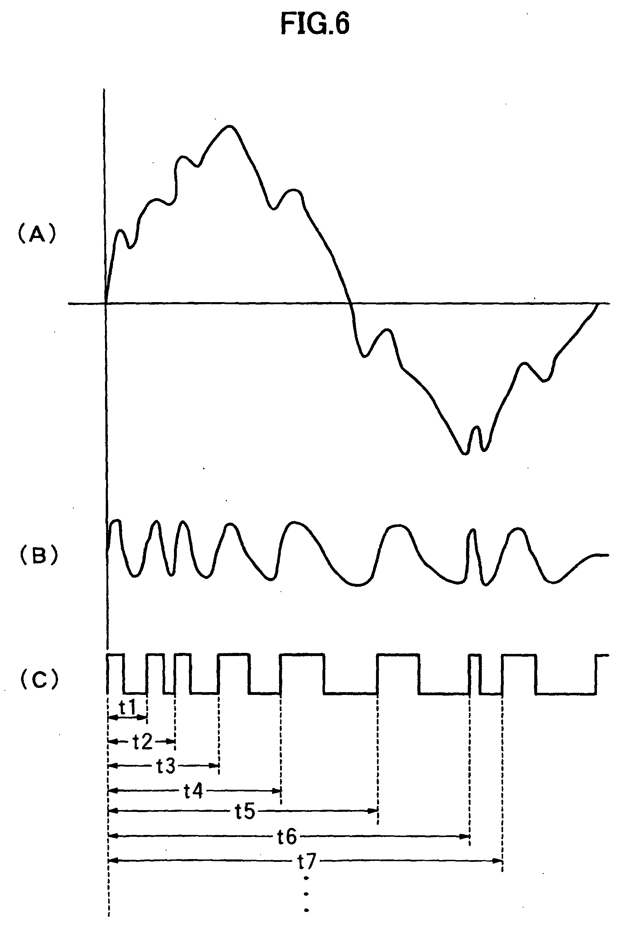

FIGS. 6(A) to 6(C) schematically show signals in respective sections of the circuit in FIG. 5(A). FIG. 6(A) shows a signal waveform after the amplification in the amplifier 30. This signal waveform reflects the shape and size of each of magnetic particles constituting the magnetic recording region, the distribution of the magnetic particles, a magnetic characteristic induced by basic information, etc. Thus, if the same physical pattern is formed in a plurality of different magnetic cards, each of the magnetic cards will have a different signal waveform or a unique signal waveform. FIG 6(B) shows a signal waveform after the signal in FIG. 6(A) is passed through the high-pass filter 31 to remove or subtract DC components therefrom, and FIG 6(C) shows a signal waveform after the digitalization by the comparator 33.

While use of various methods can be contemplated to pick up authentication information from the signal in FIG 6(A), only one of the methods will be described below. Times t₁, t₂, t₃, t₄, ---- between the rise of the first pulse and the rise of each subsequent pulse in the pulsed signal binarized by the comparator 33 as shown in FIG. 6(C) are measured. Then, the ratios of the respective measured times, or r₁ = t₁/t₂, r₂ = t₂/t₃, r₃ = t₃/t₄, ---, are calculated, and the obtained values r₁, r₂, r₃ --- are ordered according to a given rule.

As mentioned above, the pulse waveform in FIG 5(A) or 5(B) is based on the signal wave reflecting the shape and size of each of magnetic particles constituting the magnetic recording region, the distribution of the magnetic particles, a magnetic characteristic induced by basic information, etc., and is unique to the magnetic card. That is, the series of the numerical values ordered in this manner are also unique to the magnetic card. Thus, in this embodiment, this series of numerical values is used as authentication information of the magnetic card. Specifically, the obtained values r₁, r₂, r₃ --- are compared with pre-recorded authentication information to determine whether the values fall within a given allowable error or tolerance.

In the above description, the ratios r₁, r₂, r₃ --- are calculated after the acquisition of the times t₁, t₂, t₃, t₄, ----, in consideration of the possibility that a scanning rate for reading the signal in FIG. 6(A) is not always the same value in each of the reading operations. While each of the times t₁, t₂, t₃, t₄, ---- is varied depending on the scanning rate even in the same magnetic card, each of the ratios r₁, r₂, r₃ --- is maintained at a constant value. Thus, the ratios r₁, r₂, r₃ --- can be used as authentication information to obtain the same authentication information in each of the reading operations even if the scanning rate is varied.

Further, the above authentication-information pickup method can also cope with a case where some of the pulses of the signal waveform in FIG 6(C) are lost for some reason. For example, the above authentication information may be formed as a numerical sequence having a given digit number, and a rule may be set such that a magnetic card subjected to authentication is recognized as true or genuine if 80 % or more of the numerical sequence match a reference numerical sequence. In this case, even if 20 % or less of the pulses of a signal waveform obtained from a genuine magnetic card as shown in FIG. 6(C) are lost due to misreading, this card can be authenticated as a genuine card. The probability that 80 % or more of the numerical sequence formed from authentication information picked up from a randomly selected card will coincidentally match the refere numerical sequence is extremely low. Thus, there is practically no risk of misidentifying an unauthorized card as a genuine card.

This system can be applied to a read-only card, such as credit cards or bank's cash cards, to identify all issued cards individually by means of authentication information to be obtained through the above method. The system may be used in the following modes. Information for identifying an owner of a magnetic card (name, account number, credit card number, etc) is recorded as basic information in the magnetic card, and the contents of the information is visibly indicated on the surface of the card. A magnetic card supplier records basic information and authentication information of all magnetic cards on a server computer. When a card owner uses a magnetic card, a magnetic-card reader reads basic information and authentication information from the magnetic card. Then, the reader accesses the server computer vie a communication line to compare the read basic and authentication information with the corresponding basic and authentication information recorded on the computer. If both of the types of information match with the recorded information, the use of the card will be determined to be a proper use by the card owner.

If the read basic information indicates the use by the card owner, but the read authentication information does not match with the recorded authentication information, the use of the card will be determined to be an unauthorized use. For example, this card could have been forged by reading basic information from an original magnetic card and writing the basic information in another magnetic card. While such a forged card has the same basic information as that in the original card, authentication information read from the forged card is different from that of the original card because no physical pattern is formed therein, or, if any, the physical pattern is different from that of the original card. In this case, the use of such a forged card is immediately rejected. As above, the system can reliably prevent unauthorized uses, in which a malicious person illegally acquires basic information of a magnetic card of another person, and uses a forged card based on the basic information as if he/she was a person identical to the person the basic information is related to.

As another use mode, authentication information may be recorded at a location different from that of basic information of a magnetic card having a physical pattern. In this case, even if a malicious person illegally acquires basic and authentication information recorded on an original magnetic card, and makes a forged magnetic card based on this information, a signal waveform obtained from the forged card as shown in FIG 6(A) will be different from that of the original magnetic card. Thus, if the authentication information picked up from the signal waveform in FIG 6(A) does not match the authentication information recorded on the original magnetic card, it can be immediately determined that such use by the malicious person is an unauthorized use. In this manner, this magnetic card allows a reader itself to check whether or not the read authentication information matches and the authentication information recorded on the magnetic card, so as to be able to omit the process required for the magnetic-card reader to access the server computer, to reduce the cost and time for communication.

In a rewritable magnetic card having basic information to be rewritten, such as prepaid cards, the signal waveform in FIG 6(A) is changed every time the basic information is rewritten even if a physical pattern is maintained in its original state. Thus, the pulse waveform in FIG 6(C) based on the signal waveform in FIG. 6(A) and the authentication information based on the pulse waveform are also changed every time the basic information is rewritten. However, authentication information may be generated based on the pulse waveform in FIG 6(C) every time the basic information of the magnetic card is rewritten, and recorded in an updating manner at a location different from that of the basic information, to allow the rewritable magnetic card to be handled in the same manner as that in the read-only magnetic card.

In addition, the magnetic card according to this embodiment has a feature of allowing the compatibility with a conventional magnetic-card reader/writer to be assured. Specifically, a physical pattern is recorded in the magnetic recording region 12 to the extent that it does not adversely affect basic information itself and the reading/writing operations of the basic information, as mentioned above. Thus, the content of basic information can be read from the magnetic card according to this embodiment using a conventional reader. Further, basic information can also be written in the magnetic card formed with a physical pattern according to this embodiment, using a conventional writer. While authentication information cannot be handled by a conventional reader/writer, the magnetic card according to this embodiment can be used in the same mode as that of conventional magnetic cards. Thus, the conventional reader/writer may be used without any problem as provisional means until it is replaced by an apparatus capable of reading/writing authentication information, according to this embodiment. Conversely, the magnetic-card reader/writer compatible with authentication information according to this embodiment can be used to read/write a conventional magnetic card in the conventional way.

While the physical pattern in the above embodiment has been formed in a magnetic recording region 12 of a magnetic card by irradiating the magnetic recording region 12 directly with laser light, the present invention is not limited to such a physical pattern. For example, a physical pattern may be formed by mixing a small amount of ferromagnetic powder in a magnetic powder to be applied onto a magnetic card. While the ferromagnetic material is not initially magnetized, it is magnetized in conjunction with an operation of initially writing basic information, and this magnetization state will be continuously maintained. The magnetic characteristic induced by this ferromagnetic material is affected by the size, number and distribution of the ferromagnetic particles and a magnetic characteristic induced by the basic information, and is thereby unique to the magnetic card. Thus, a signal waveform as shown in FIG. 6(A) can be read from such a card to pick up authentication information unique to the card.

Further, while the above embodiment has been described by taking a magnetic card as one example of a magnetic recording medium, the present invention may be applied to a magnetic stripe to be attached onto an article which is exclusively owner's article, such as an identification card or passport, after recording thereon information required for the article.

Furthermore, while the above embodiment has been described in connection with the method for picking up authentication information from a magnetic card formed with a physical pattern, as shown in FIGS. 5(A) and 5(B) and FIGS. 6(A) to 6(C), the present invention is not limited to such a method. For example, the signal waveform in FIG. 6(A) may be subjected to frequency analysis to obtain a frequency characteristic and pick up information unique to individual cards in accordance with the frequency characteristic, and the unique information may be used as authentication information.

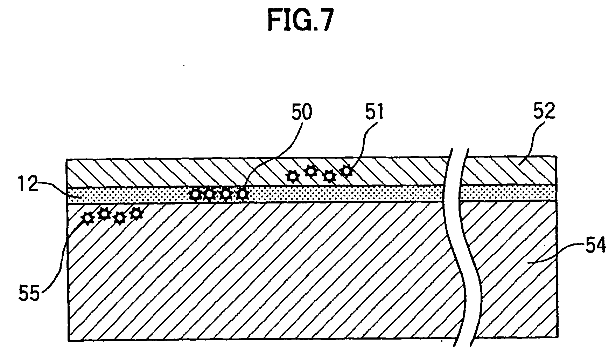

Another possible method for forming a physical pattern will be described below. In the following embodiments, a physical pattern itself will be formed differently in each magnetic card. If a different physical pattern is formed in each magnetic card, authentication information generated will differ in accordance with the physical pattern to allow the magnetic cards to be authenticated.
(1) As shown in FIG 7, additive particles 50 capable of scattering or reflecting light are mixed in a magnetic recording region 12 of a magnetic card, and the magnetic recording region 12 is irradiated with laser light or any other suitable light having a high heating value (such as light from a halogen lamp) serving as physical-pattern formation means. The particles 50 unevenly distributed over the magnetic recording region randomly scatter or reflect the radiated light, and thereby a physical pattern to be formed in the magnetic recording region 12 will be a random pattern based on the unevenness of the particles. Thus, the physical pattern is formed differently in each of the magnetic cards, and a different magnetic characteristic is obtained from each of the magnetic cards.
(2) As shown in FIG 7, a surface coating material 52 mixed with light-absorbing particles 51 as additives is applied on a magnetic recording region 12 of a magnetic card, and the magnetic recording region 12 is irradiated with laser light or any other suitable light having a high heating value (such as light from a halogen lamp) serving as physical-pattern formation means. The light-absorbing particles 51 unevenly distributed over the magnetic recording region randomly absorb the laser light or other light, and thereby a physical pattern to be formed in the magnetic recording region will be a random pattern according to the distribution of the light-absorbing particles. Thus, the physical pattern is formed differently in each of the magnetic cards, and a different magnetic characteristic is obtained from each of the magnetic cards.
(3) A surface coating material mixed with light-harvesting or-conversing particles as additives is applied on a magnetic recording region 12 of a magnetic card, and the magnetic recording region 12 is irradiated with laser light or any other suitable light having a high heating value (such as light from a halogen lamp) serving as physical-pattern formation means. In one of the additive particles, only light incident in the particle from a specific direction is converged, and the magnetic recording region is irradiated with the converged light having an increased light intensity. Thus, in view of the entire region irradiated with the light, the intensity of the radiated light is randomly varied, and thereby a physical pattern to be formed in the magnetic recording region will be a random pattern according to the distribution of the particles. Therefore, the physical pattern is formed differently in each magnetic card, and a different magnetic characteristic is obtained from each of the magnetic cards.
(4) When a magnetic material is applied on a magnetic recording region, particles having high heat conductivity are added into the magnetic material. Thus, when the magnetic recording region is irradiated with laser light or other light, portions of the magnetic recording region having the particles allow heat to be quickly diffused therearound, and thereby the temperature of the portions is slowly increased as than that of the latter portions compared to the remaining portions or the magnetic characteristic of the former portions is changed at a lower rate than that of the latter portions. Therefore, a physical pattern to be formed in the magnetic recording region will be a random pattern according to the distribution of the particles, and the physical pattern and a magnetic characteristic induced by the physical pattern are varied in each magnetic card.
(5) A mixture of plural kinds of magnetic materials having different characteristics is applied on a magnetic recording region. Thus, even if the magnetic recording region is scanned by laser light or another light in the same manner, a physical pattern to be formed and a magnetic characteristic to be induced by the physical pattern are varied in individual magnetic cards depending on the mixed state of the different magnetic materials.
(6) Additive particles having no coercitivity are mixed with a magnetic material to be applied on a magnetic recording region. Thus, even if the magnetic recording region is scanned by laser light or other light in the same manner, a physical pattern to be formed and a magnetic characteristic to be induced by the physical pattern are varied in individual magnetic cards depending on the mixed state of the particles having no coercitivity.
(7) As shown in FIG. 7, endothermic additive particles are mixed with a substrate 54 of a magnetic card on which a magnetic material is to be applied during the process of forming the substrate 54. Thus, when laser light or another light is emitted, for example, from the back surface of the magnetic card, portions adjacent to the endothermic particles can absorb heat, and thereby the temperature of the portions is slowly increased as compared to the remaining portions or the magnetic characteristic of the former portions is changed at a lower rate than that of the latter portions. Therefore, a physical pattern will be a random pattern according to the distribution of the endothermic particles, and the physical pattern and a magnetic characteristic induced by the physical pattern are varied in each magnetic card.
(8) A physical pattern is formed in a magnetic recording region by irradiating a magnetic card with heat rays, and heat-ray reflecting additive particles are mixed with a substrate of a magnetic card during the process of forming the substrate. Thus, the temperature of a specific position in a magnetic material applied on the substrate is increased, and thereby the temperature of the entire magnetic recording region is unevenly increased. Therefore, the physical pattern to be formed and a magnetic characteristic to be induced by the physical pattern are varied in each magnetic card.
(9) A physical pattern is formed by irradiating a magnetic card with heat rays, and a material capable of diffusing the heat rays is disposed between a source of the heat rays and the magnetic card. Thus, the heat rays are unevenly dispersed by the heat-ray dispersing material, and thereby the physical pattern to be formed and a magnetic characteristic to be induced by the physical pattern are varied in each magnetic card.
(10) A physical pattern is formed by irradiating a magnetic card with heat rays, and a material capable of diffusing the heat rays is disposed between a source of the heat rays and the magnetic card. Thus, the characteristic of heat deterioration in a magnetic material formed on the magnetic card is not linear, and thereby the physical pattern to be formed and a magnetic characteristic to be induced by the physical pattern are varied in each magnetic card.
(11) A physical pattern is formed by irradiating a magnetic card with a laser beam, and the laser beam is set to have a diameter causing diffused reflection at the surface of a magnetic material formed on the magnetic card. Thus, the laser beam is unevenly reflected by the surface of the magnetic material, and thereby the physical pattern to be formed and a magnetic characteristic to be induced by the physical pattern are varied in each magnetic card.
(12) Some of the above techniques (1) to (11) may be appropriately combined together.

As mentioned above, according to the present invention, authentication information generated in accordance with a physical pattern becomes unique to each magnetic card, and the magnetic cards can be reliably identified in accordance with the authentication information. In addition, even if the content of basic information required for a magnetic card to carry out its original function is illegally copied or a forged card is fabricated, authentication information of an original card will not be reflected on the forged card so that an unauthorized use can be immediately detected.

### INDUSTRIAL APPLICABILITY

The magnetic-recording-medium authentication method and system and the authenticable magnetic recording medium according to the present invention can be used in the production, distribution, sale, etc. of all recording mediums adapted to magnetically record information and required to be authenticated, such as a read-only magnetic card, e.g. credit cards, and a rewritable magnetic card, e.g. prepaid cards.

## Claims

1. A method of authenticating a magnetic recording medium which has a recording region adapted to magnetically record basic information thereon, said method comprising:
a physical-pattern formation step of forming a physical pattern in said recording region so as to change a magnetic property of said recording region to an extent allowing said basic information to be read from and/or written in said recording region;
an authentication-information generation step of reading a magnetic characteristic induced by said physical pattern from said recording region to generate authentication information in accordance with said magnetic characteristic; and
an authentication step of authenticating said magnetic recording medium in accordance with said authentication information.

2. The method as defined in claim 1, wherein when said basic information on said magnetic recording medium formed with said physical pattern is duly rewritten, said authentication-information generation step is further performed to generate new authentication information, and then said authentication step is performed in accordance with said new authentication information

3. The method as defined in claim 1 or 2, wherein the content of the authentication information generated in said authentication-information generation step is recorded on said magnetic recording medium separately from the basic information.

4. The method as defined in either one of claims 1 to 3, wherein said physical pattern is formed by irradiating said recording region with laser light.

5. A physical-pattern forming apparatus for a magnetic recording medium having a recording region adapted to magnetically record basic information thereon, said apparatus comprising means for forming a physical pattern in said recording region so as to change a magnetic property of said recording region to an extent allowing said basic information to be read from and/or written in said recording region.

6. The physical-pattern forming apparatus as defined in claim 5, wherein said means is designed to irradiate said recording region with laser light so as to form said physical pattern therein.

7. An authentication-information generating apparatus for a magnetic recording medium having a recording region adapted to magnetically record basic information thereon, said apparatus comprising means for reading a magnetic characteristic induced by a physical pattern which is formed in said recording region, and generating authentication information for authenticating said magnetic recording medium.

8. The authentication-information generating apparatus as defined in claim 7, which includes means for writing said authentication information in said magnetic recording medium separately from said basic information.

9. An authentication apparatus for a magnetic recording medium, comprising means for comparing the authentication information obtained by the authentication-information generating apparatus as defined in claim 7 or 8, with pre-recorded information to authenticate said magnetic recording medium.

10. An authentication system for a magnetic recording medium having a recording region adapted to magnetically record basic information thereon, said apparatus comprising:
physical-pattern formation means for forming a physical pattern in said recording region so as to change a magnetic property of said recording region to an extent allowing said basic information to be read from and/or written in said recording region;
authentication-information generation means for reading a magnetic characteristic induced by said physical pattern from said recording region to generate authentication information; and
authentication means for comparing said authentication information with pre-recorded information to authenticate said magnetic recording medium.

11. The authentication system as defined in claim 10, wherein said physical-pattern formation means is designed to irradiate said recording region with laser light so as to form said physical pattern therein.

12. The authentication system as defined in claim 10 or 11, which further includes authentication-information reading/writing means adapted to read/write the authentication information from/in said magnetic recording medium separately from said basic information, wherein said authentication means is designed to compare an authentication information newly generated from said authentication-information generation means with said pre-recorded authentication information written by said authentication-information reading/writing means to authenticate said magnetic recording medium.

13. The authentication system as defined in claims 10 to 12, wherein said authentication means is located at a location separate from those of said physical-pattern formation means and/or said authentication-information generation means, in such a manner as to communicate with said physical-pattern formation means and/or said authentication- information generation means via a communication line.

14. A magnetic recording medium comprising a recording region which has basic information recorded thereon and a physical pattern written therein so as to change a magnetic property of said recording region to an extent allowing said basic information to be read from and/or rewritten in said recording region, said magnetic recording medium being adapted to allow a magnetic characteristic induced by said physical pattern to be read from said recording region so as to generate authentication information and authenticate said magnetic recording medium in accordance with said authentication information.

15. The magnetic recording medium as defined in claim 14, wherein the content of said generated authentication information is recorded separately from the basic information.

16. The magnetic recording medium as defined in claim 14 or 15, wherein said physical pattern is written in said recording region by irradiating said recording region with laser light.

## Amended claims

### Amended claims under Art. 19.1 PCT

**1.** (Amended) A method of authenticating a magnetic recording medium which has a recording region adapted to magnetically record basic information thereon, said method comprising:
a physical-pattern formation step of forming a physical pattern in said recording region so as to change a magnetic property of said recording region to an extent allowing said basic information to be read from and/or written in said recording region and in such a manner as to allow authentication information to be obtained as a signal having a higher frequency than that of a signal of said basic information to uniquely identify said magnetic recording medium;
an authentication-information generation step of reading a magnetic characteristic induced by said physical pattern from said recording region to generate the authentication information in accordance with said magnetic characteristic; and
an authentication step of authenticating said magnetic recording medium in accordance with said authentication information.

**2.** The method as defined in claim 1, wherein when said basic information on said magnetic recording medium formed with said physical pattern is duly rewritten, said authentication-information generation step is further performed to generate new authentication information, and then said authentication step is performed in accordance with said new authentication information.

**3.** The method as defined in claim 1 or 2, wherein the content of the authentication information generated in said authentication-information generation step is recorded on said magnetic recording medium separately from the basic information.

**4.** The method as defined in either one of claims 1 to 3, wherein said physical pattern is formed by irradiating said recording region with laser light.

**5.** (Amended) A physical-pattern forming apparatus for a magnetic recording medium having a recording region adapted to magnetically record basic information thereon, said apparatus comprising means for forming a physical pattern in said recording region so as to change a magnetic property of said recording region to an extent allowing said basic information to be read from and/or written in said recording region and in such a manner as to allow authentication information to be obtained as a signal having a higher frequency than that of a signal of said basic information to uniquely identify said magnetic recording medium.

**6.** The physical-pattern forming apparatus as defined in claim 5, wherein said means is designed to irradiate said recording region with laser light so as to form said physical pattern therein.

**7.** (Amended) An authentication-information generating apparatus for a magnetic recording medium having a recording region adapted to magnetically record basic information thereon, said apparatus comprising means for reading a magnetic characteristic induced by a physical pattern which is formed in said recording region by the physical-pattern forming apparatus as defined in claim 5 or 6, and generating authentication information for authenticating said magnetic recording medium.

**8.** The authentication-information generating apparatus as defined in claim 7, which includes means for writing said authentication information in said magnetic recording medium separately from said basic information.

**9.** An authentication apparatus for a magnetic recording medium, comprising means for comparing the authentication information obtained by the authentication-information generating apparatus as defined in claim 7 or 8, with pre-recorded information to authenticate said magnetic recording medium.

**10.** (Amended) An authentication system for a magnetic recording medium having a recording region adapted to magnetically record basic information thereon, said apparatus comprising:
physical-pattern formation means for forming a physical pattern in said recording region so as to change a magnetic property of said recording region to an extent allowing said basic information to be read from and/or written in said recording region and in such a manner as to allow authentication information to be obtained as a signal having a higher frequency than that of a signal of said basic information to uniquely identify said magnetic recording medium;
authentication-information generation means for reading a magnetic characteristic induced by said physical pattern from said recording region to generate the authentication information; and
authentication means for comparing said authentication information with pre-recorded information to authenticate said magnetic recording medium.

**11.** The authentication system as defined in claim 10, wherein said physical-pattern formation means is designed to irradiate said recording region with laser light so as to form said physical pattern therein.

**12.** The authentication system as defined in claim 10 or 11, which further includes authentication-information reading/writing means adapted to read/write the authentication information from/in said magnetic recording medium separately from said basic information, wherein said authentication means is designed to compare an authentication information newly generated from said authentication-information generation means with said pre-recorded authentication information written by said authentication-information reading/writing means to authenticate said magnetic recording medium.

**13.** (Amended) The authentication system as defined in either one of claims 10 to 12, wherein said authentication means is located at a location separate from those of said physical-pattern formation means and/or said authentication-information generation means, in such a manner as to communicate with said physical-pattern formation means and/or said authentication- information generation means via a communication line.

**14.** (Amended) A magnetic recording medium comprising a recording region which has basic information recorded thereon and a physical pattern written therein so as to change a magnetic property of said recording region to an extent allowing said basic information to be read from and/or rewritten in said recording region and in such a manner as to allow authentication information to be obtained as a signal having a higher frequency than that of a signal of said basic information to uniquely identify said magnetic recording medium, said magnetic recording medium being adapted to allow a magnetic characteristic induced by said physical pattern to be read from said recording region so as to generate authentication information and authenticate said magnetic recording medium in accordance with said authentication information.

**15.** The magnetic recording medium as defined in claim 14, wherein the content of said generated authentication information is recorded separately from the basic information.

**16.** The magnetic recording medium as defined in claim 14 or 15, wherein said physical pattern is written in said recording region by irradiating said recording region with laser light.
